# EUROPÄISCHE PATENTANMELDUNG

(11) **EP 4 046 880 A1**
(43) Veröffentlichungstag der Anmeldung: **24.08.2022**
(21) Anmeldenummer: 21157610.3
(22) Anmeldetag: 17.02.2021
(51) Int. Cl.: B60S 1/56, B60S 1/60, B60Q 1/00, B60Q 1/04, B60Q 1/05, F21S 41/00

(54) **KRAFTFAHRZEUGSCHEINWERFER**

(71) Anmelder: ZKW Group GmbH, 3250 Wieselburg (AT)
(72) Erfinder: Leonhartsberger, Rudolf, 3393 Zelking (AT); Pitterle, Georg, 3241 Kirnberg an der Mank (AT); Jackl, Christian, 3250 Wieselburg (AT); Bierwipfl, Christoph, 3376 St. Martin-Karlsbach (AT); Popp, Roman, 3251 Purgstall an der Erlauf (AT); Kreuzer, Andreas, 4400 Steyr (AT); Stamminger, Robert, 3371 Neumarkt an der Ybbs (AT)
(74) Vertreter: Patentanwaltskanzlei Matschnig & Forsthuber OG

(57) **Zusammenfassung**

Kraftfahrzeugscheinwerfer (1), umfassend eine Abschlussscheibe (), eine Blende (3), ein Scheibenwischer (4) mit einem Scheibenwischerblatt (4a), welches zwischen der Blende (3) und der Abschlussscheibe (4a) angeordnet ist, eine Antriebsvorrichtung (5), welche dazu eingerichtet ist, das Scheibenwischerblatt (4a) zwischen einer Anfangsposition und einer Endposition hin und her zu bewegen, wobei durch die Bewegung des Scheibenwischerblatts (4a) von der Anfangsposition in die Endposition bzw. von der Endposition in die Anfangsposition und durch den Kontakt des Scheibenwischerblatts (4a) mit der Außenseite der Abschlussscheibe (2) ein zu reinigender Bereich (2b) der Abschlussscheibe (2) gereinigt werden kann, wobei sich das Scheibenwischerblatt (4a) in der Anfangsposition vollständig unterhalb einer Oberkante (3a) der Blende (3) befindet und sich in der Endposition teilweise oder vollständig über die Oberkante (3a) der Blende (3) erstreckt.

## Beschreibung

Die Erfindung betrifft einen Kraftfahrzeugscheinwerfer, umfassend
- eine Abschlussscheibe,
- eine Blende, welche an der Abschlussscheibe befestigbar ist, wobei sich die Blende in einem an der Abschlussscheibe befestigen Zustand von einer Unterseite der Abschlussscheibe vertikal in Richtung einer Oberseite der Abschlussscheibe hin erstreckt, wobei die vertikale Erstreckung der Blende kleiner ist als die vertikale Erstreckung der Abschlussscheibe, wobei die Blende eine Oberkante aufweist, welche die höchste vertikale Erstreckung der Blende relativ zu der Abschlussscheibe definiert,
- ein Scheibenwischer mit einem beweglich gelagerten Scheibenwischerblatt, welches zwischen der Blende und der Abschlussscheibe angeordnet ist, wobei das Scheibenwischerblatt eine der Blende zugewandte Außenseite der Abschlussscheibe kontaktiert,
- eine Antriebsvorrichtung, welche dazu eingerichtet ist, das Scheibenwischerblatt zwischen einer Anfangsposition und einer Endposition hin und her zu bewegen, wobei durch die Bewegung des Scheibenwischerblatts von der Anfangsposition in die Endposition bzw. von der Endposition in die Anfangsposition und durch den Kontakt des Scheibenwischerblatts mit zumindest einem Teil der Außenseite der Abschlussscheibe ein zu reinigender Bereich der Abschlussscheibe gereinigt werden kann.

Die Erfindung betrifft ferner einen Kraftfahrzeugscheinwerfer, umfassend
- eine Abschlussscheibe, wobei die Abschlussscheibe aus zumindest zwei Bereichen gebildet ist, wobei ein erster Bereich ortsfest und ein zweiter, zu reinigender, Bereich relativ zu dem ersten Bereich bewegbar ausgebildet ist,
- eine Blende, welche sich von einer Unterseite der Abschlussscheibe vertikal in Richtung einer Oberseite der Abschlussscheibe hin erstreckt, wobei die vertikale Erstreckung der Blende kleiner ist als die vertikale Erstreckung der Abschlussscheibe, wobei die Blende eine Oberkante aufweist, welche die höchste vertikale Erstreckung der Blende relativ zu der Abschlussscheibe definiert.

Aus dem Stand der Technik sind gattungsgemäße Kraftfahrzeugscheinwerfer bekannt, welche Scheibenwischer zur Reinigung einer Abschlussscheibe des Kraftfahrzeugscheinwerfers aufweisen. Dadurch, dass Scheibenwischerblätter des Scheibenwischers an der Außenseite der Abschlussscheibe anliegen müssen, unterliegen diese nachteiligerweise vollständig den Witterungsbedingungen, wodurch die Lebensdauer der Scheibenwischerblätter und damit auch die Qualität der Reinging der Abschlussscheibe reduziert werden.

Die Aufgabe der vorliegenden Erfindung besteht darin, die Nachteile des Standes der Technik zu lindern bzw. zu beseitigen. Die Erfindung setzt sich daher insbesondere zum Ziel, einen Kraftfahrzeugscheinwerfer zu schaffen, bei welchem die Reinigung einer Abschlussscheibe des Kraftfahrzeugscheinwerfers verbessert wird.

Diese Aufgabe wird durch einen Kraftfahrzeugscheinwerfer mit den Merkmalen von Anspruch 1 und einen Kraftfahrzeugscheinwerfer mit den Merkmalen von Anspruch 9 gelöst. Bevorzugte Ausführungen sind in den abhängigen Ansprüchen angegeben.

Erfindungsgemäß befindet sich das Scheibenwischerblatt in der Anfangsposition vollständig unterhalb der Oberkante der Blende und erstreckt sich in der Endposition teilweise oder vollständig über die Oberkante der Blende.

Dadurch ergibt sich der Vorteil, dass das Scheibenwischerblatt in der Anfangsposition vor Witterung geschützt ist, da sich das Scheibenwischerblatt in der Anfangsposition hinter der Blende bzw. zwischen der Blende und der Abschlussscheibe befindet. Ein weiterer Vorteil ist, dass das Scheibenwischerblatt von außen für einen Betrachter des Kraftfahrzeugscheinwerfers nicht sichtbar ist. Mit der Bewegung des Scheibenwischerblatts kann insbesondere der zu reinigender Bereich der Abschlussscheibe gereinigt werden. Die Abschlussscheibe ist insbesondere dazu eingerichtet, ein Gehäuse des Kraftfahrzeugscheinwerfers abzuschließen. In dieser Offenbarung ist unter Reinigung insbesondere die mechanische Entfernung von Verunreinigungen zu verstehen.

Es kann vorgesehen sein, dass die Abschlussscheibe aus zumindest zwei Bereichen gebildet ist, wobei ein erster Bereich ein erstes Material und ein zweiter, der zu reinigende, Bereich ein zweites Material aufweist, wobei vorzugsweise das erste und das zweite Material unterschiedlich sind. Die zwei Bereiche können einstückig bzw. einteilig ausgebildet sein.

Es kann vorgesehen sein, dass das erste Material eine geringere Härte als das zweite Material aufweist. Dadurch ergibt sich der Vorteil, dass der zweite, zu reinigende, Bereich eine höhere mechanische Belastbarkeit aufweist. Die Reinigung des zweiten Bereichs mit dem Scheibenwischer kann somit weniger mechanische Beschädigungen hervorrufen.

Es kann vorgesehen sein, dass das erste Material einen Kunststoff und das zweite Material ein Glas umfasst. Insbesondere sind das erste und/oder zweite Material transparent ausgebildet.

Es kann vorgesehen sein, dass das Scheibenwischerblatt um eine Drehachse drehbar gelagert ist, wobei die Drehachse im Wesentlichen orthogonal auf die Abschlussscheibe orientiert ist, wobei der Übergang von der Anfangsposition in die Endposition bzw. von der Endposition in die Anfangsposition einer Drehung des Scheibenwischerblatts um die Drehachse entspricht. Das Scheibenwischerblatt ist vorzugsweise stabförmig ausgebildet und umfasst einen gummierten Abschnitt, welcher die Außenseite der Abschlussscheibe kontaktiert. Bei der Drehung des Scheibenwischerblatts um die Drehachse kann sich ein erstes Ende des Scheibenwischerblatts entlang einer Kreisbahn bewegen, wobei ein zweites Ende des Scheibenwischerblatts, welches dem ersten Ende diametral gegenüber liegt, im Zentrum der Kreisbahn angeordnet sein kann.

Es kann vorgesehen sein, dass das Scheibenwischerblatt entlang einer, vorzugsweise vertikalen, Achse bewegbar ist, wobei die Achse im Wesentlichen parallel zu der Abschlussscheibe orientiert ist, wobei der Übergang von der Anfangsposition in die Endposition bzw. von der Endposition in die Anfangsposition einer Translation des Scheibenwischerblatts entlang der Achse entspricht. Das Scheibenwischerblatt weist vorzugsweise eine Länge auf, welche im Wesentlichen orthogonal auf die Achse orientiert sein kann. In der Endposition kann das Scheibenwischerblatt vollständig oberhalb der Oberkante der Blende angeordnet sein.

Es kann vorgesehen sein, dass der Kraftfahrzeugscheinwerfer weiters umfasst:
- eine Sensorvorrichtung zur optischen Erfassung einer Umgebung des Kraftfahrzeugscheinwerfers, wobei die Sensorvorrichtung innerhalb des Kraftfahrzeugscheinwerfers dergestalt angeordnet ist, dass die optische Erfassung der Umgebung durch den zu reinigenden Bereich der Abschlussscheibe hindurch erfolgt. Dadurch ergibt sich der Vorteil, dass der zweite Bereich der Abschlussscheibe, jener Bereich durch welchen die Sensorvorrichtung die Umgebung des Kraftfahrzeugscheinwerfers erfassen kann, mit dem Scheibenwischer gereinigt werden kann, wodurch eine stets optimale und beeinträchtigungsfreie Erfassung der Umgebung mit der Sensorvorrichtung erfolgen kann. Insbesondere erfolgt die Erfassung der Umgebung mit der Sensorvorrichtung ausschließlich durch den zweiten Bereich.

Es kann vorgesehen sein, dass der Kraftfahrzeugscheinwerfer weiters umfasst:
- eine Beleuchtungsvorrichtung zur Erzeugung und Abstrahlung einer Lichtfunktion in eine Umgebung des Kraftfahrzeugscheinwerfers, wobei die Beleuchtungsvorrichtung innerhalb des Kraftfahrzeugscheinwerfers dergestalt angeordnet ist, dass die Abstrahlung der Lichtfunktion durch den ersten Bereich der Abschlussscheibe hindurch erfolgt. Beispielsweise kann vorgesehen sein, dass die Abstrahlung der Lichtfunktion in die Umgebung ausschließlich durch den zweiten Bereich erfolgt.

Gemäß einer alternativen Ausführungsform eines erfindungsgemäßen Kraftfahrzeugscheinwerfers umfasst dieser
- einen Scheibenwischer mit einem Scheibenwischerblatt, welches zwischen der Blende und der Abschlussscheibe ortsfest derart angeordnet ist, dass das Scheibenwischerblatt eine der Blende zugewandte Außenseite der Abschlussscheibe kontaktiert, wobei sich das Scheibenwischerblatt vollständig unterhalb der Oberkante der Blende befindet,
- eine Antriebsvorrichtung, welche dazu eingerichtet ist, den zweiten Bereich der Abschlussscheibe relativ zu dem ersten Bereich und relativ zu dem Scheibenwischerblatt zu bewegen, wobei durch die Bewegung des zweiten Bereichs und durch den Kontakt des zweiten Bereichs mit dem Scheibenwischerblatt der zweite Bereich gereinigt werden kann.

Dadurch ergibt sich der Vorteil, dass das Scheibenwischerblatt vor Witterung geschützt ist, da sich das Scheibenwischerblatt stets hinter der Blende bzw. zwischen der Blende und der Abschlussscheibe befindet. Ein weiterer Vorteil ist, dass das Scheibenwischerblatt von außen für einen Betrachter des Kraftfahrzeugscheinwerfers nicht sichtbar ist. Mit der Bewegung des zweiten Bereichs relativ zu dem ersten Bereich und dem Scheibenwischerblatt kann insbesondere der zweite Bereich der Abschlussscheibe gereinigt werden. Der zweite Bereich kann insbesondere kreisförmig ausgebildet sein, wobei vorzugsweise das Scheibenwischerblatt eine Länge aufweist, welche größer oder gleich dem Radius des kreisförmigen zweiten Bereichs ist. Der erste Bereich kann eine zu der Form des zweiten Bereichs korrespondierende Öffnung aufweisen, in welcher der zweite Bereich angeordnet bzw. aufgenommen ist. Zwischen dem ersten und zweiten Bereich kann ein Dichtelement angeordnet sein, welches dazu eingerichtet ist, den Kontaktbereich zwischen dem ersten und dem zweiten Bereich abzudichten.

Es kann vorgesehen sein, dass der erste Bereich ein erstes Material und der zweite, der zu reinigende, Bereich ein zweites Material aufweist, wobei vorzugsweise das erste und das zweite Material unterschiedlich sind.

Es kann vorgesehen sein, dass das erste Material eine geringere Härte als das zweite Material aufweist. Dadurch ergibt sich der Vorteil, dass der zweite, zu reinigende, Bereich eine höhere mechanische Belastbarkeit aufweist. Die Reinigung des zweiten Bereichs mit dem Scheibenwischerblatt kann somit weniger mechanische Beschädigungen hervorrufen.

Es kann vorgesehen sein, dass das erste Material einen Kunststoff und das zweite Material ein Glas umfasst. Insbesondere sind das erste und/oder zweite Material transparent ausgebildet.

Es kann vorgesehen sein, dass der zweite Bereich der Abschlussscheibe um eine Drehachse drehbar gelagert ist, wobei die Drehachse im Wesentlichen orthogonal auf die Abschlussscheibe orientiert ist, wobei durch die Drehung des zweiten Bereichs um die Drehachse und den Kontakt des zweiten Bereichs mit dem Scheibenwischerblatt der zweite Bereich gereinigt werden kann. Die Drehung des zweiten Bereichs erfolgt bevorzugt mit der Antriebsvorrichtung.

Es kann vorgesehen sein, dass der Kraftfahrzeugscheinwerfer weiters umfasst:
- eine Sensorvorrichtung zur optischen Erfassung einer Umgebung des Kraftfahrzeugscheinwerfers, wobei die Sensorvorrichtung innerhalb des Kraftfahrzeugscheinwerfers dergestalt angeordnet ist, dass die optische Erfassung der Umgebung durch den zweiten Bereich der Abschlussscheibe hindurch erfolgt. Dadurch ergibt sich der Vorteil, dass der zweite Bereich der Abschlussscheibe, jener Bereich durch welchen die Sensorvorrichtung die Umgebung des Kraftfahrzeugscheinwerfers erfassen kann, durch eine Bewegung des zweiten Bereichs relativ zu dem ersten Bereich und relativ zu dem Scheibenwischer gereinigt werden kann, wodurch eine stets optimale und beeinträchtigungsfreie Erfassung der Umgebung mit der Sensorvorrichtung erfolgen kann.

Es kann vorgesehen sein, dass der Kraftfahrzeugscheinwerfer weiters umfasst:
- eine Beleuchtungsvorrichtung zur Erzeugung und Abstrahlung einer Lichtfunktion in eine Umgebung des Kraftfahrzeugscheinwerfers, wobei die Beleuchtungsvorrichtung innerhalb des Kraftfahrzeugscheinwerfers dergestalt angeordnet ist, dass die Abstrahlung der Lichtfunktion durch den ersten Bereich der Abschlussscheibe hindurch erfolgt. Insbesondere erfolgt die Abstrahlung der Lichtfunktion in die Umgebung ausschließlich durch den zweiten Bereich.

Der Kraftfahrzeugscheinwerfer gemäß der ersten oder zweiten Ausführungsform kann ein Gehäuse umfassen, wobei die Abschlussscheibe das Gehäuse abschließt. Die Sensorvorrichtung und die Beleuchtungsvorrichtung können innerhalb des Gehäuses angeordnet sein.

Im Rahmen dieser Beschreibung sind die Begriffe "oben", "unten", "horizontal", "vertikal" als Angaben der Ausrichtung zu verstehen, wenn der Kraftfahrzeugscheinwerfer in normaler Benutzungsstellung angeordnet ist, nachdem er in einem Kraftfahrzeug eingebaut wurde.

Die Erfindung wird nachstehend anhand eines bevorzugten Ausführungsbeispiels, auf das sie jedoch nicht beschränkt sein soll, noch weiter erläutert. In den Zeichnungen zeigt:
Fig. 1 eine seitliche schematische Ansicht einer ersten Ausführungsform eines erfindungsgemäßen Kraftfahrzugscheinwerfers;
Fig. 2 eine seitliche schematische Ansicht einer zweiten Ausführungsform eines erfindungsgemäßen Kraftfahrzugscheinwerfers;
Fig. 3 eine schematische Vorderansicht einer dritten Ausführungsform eines erfindungsgemäßen Kraftfahrzeugscheinwerfers.

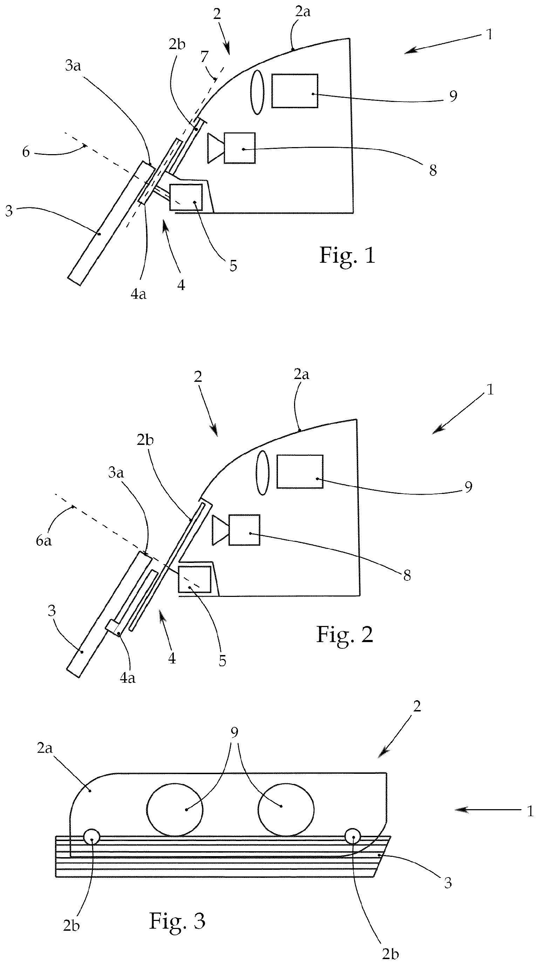

Fig. 1 zeigt eine erste Ausführungsform eines erfindungsgemäßen Kraftfahrzeugscheinwerfers 1, umfassend eine Abschlussscheibe 2 und eine Blende 3. Die Blende 3 ist an der Abschlussscheibe 2 befestigbar, wobei die Blende 3 in dem gezeigten Ausführungsbeispiel an der Abschlussscheibe 2 befestigt ist und sich von einer Unterseite der Abschlussscheibe 2 vertikal in Richtung einer Oberseite der Abschlussscheibe 2 hin erstreckt. Die vertikale Erstreckung der Blende 3 ist kleiner als die vertikale Erstreckung der Abschlussscheibe 2, wobei die Blende 3 eine Oberkante 3a aufweist, welche die höchste vertikale Erstreckung der Blende 3 relativ zu der Abschlussscheibe 2 definiert.

Der Kraftfahrzeugscheinwerfers 1 umfasst weiters einen Scheibenwischer 4 mit einem beweglich gelagerten Scheibenwischerblatt 4a, welches zwischen der Blende 3 und der Abschlussscheibe 2 angeordnet ist, wobei das Scheibenwischerblatt 4a eine der Blende 3 zugewandte Außenseite der Abschlussscheibe 2 kontaktiert.

Der Kraftfahrzeugscheinwerfers 1 umfasst weiters eine Antriebsvorrichtung 5, welche dazu eingerichtet ist, das Scheibenwischerblatt 4a zwischen einer Anfangsposition und einer Endposition hin und her zu bewegen, wobei durch die Bewegung des Scheibenwischerblatts 4a von der Anfangsposition in die Endposition bzw. von der Endposition in die Anfangsposition und durch den Kontakt des Scheibenwischerblatts 4a mit zumindest einem Teil der Außenseite der Abschlussscheibe 2 ein zu reinigender Bereich der Abschlussscheibe 2 gereinigt werden kann. Das Scheibenwischerblatt 4a befindet sich in der Anfangsposition vollständig unterhalb der Oberkante 3a der Blende 3 und erstreckt sich in der Endposition teilweise oder vollständig über die Oberkante 3a der Blende 3. In Fig. 1 befindet sich das Scheibenwischerblatt 4a in der Endposition.

Die Abschlussscheibe 2 ist aus zumindest zwei Bereichen 2a, 2b gebildet, wobei ein erster Bereich 2a ein erstes Material und ein zweiter, der zu reinigende, Bereich 2b ein zweites Material aufweist, wobei das erste und das zweite Material unterschiedlich sind. Das erste Material hat eine geringere Härte als das zweite Material. In dem gezeigten Ausführungsbeispiel ist das erste Material ein, vorzugsweise transparenter, Kunststoff und das zweite Material ein, vorzugsweise transparentes, Glas.

Das Scheibenwischerblatt 4a ist um eine Drehachse 6 drehbar gelagert, wobei die Drehachse 6 im Wesentlichen orthogonal auf die Abschlussscheibe 2 orientiert ist. Der Übergang von der Anfangsposition in die Endposition bzw. von der Endposition in die Anfangsposition entspricht einer Drehung des Scheibenwischerblatts 4a um die Drehachse 6.

Das Scheibenwischerblatt 4a kann auch entlang einer, vorzugsweise vertikalen, Achse 7 bewegbar sein, wobei die Achse 7 im Wesentlichen parallel zu der Abschlussscheibe 2 orientiert ist, und der Übergang von der Anfangsposition in die Endposition bzw. von der Endposition in die Anfangsposition einer Translation des Scheibenwischerblatts 4a entlang der Achse 7 entspricht. In dieser alternativen Ausführungsform befindet sich das Scheibenwischerblatt 4a in der Endposition vollständig oberhalb der Oberkante 3a der Blende 3.

In den gezeigten Ausführungsbeispielen gemäß den Fig. 1 und 2 umfasst der Kraftfahrzeugscheinwerfer 1 weiters eine Sensorvorrichtung 8 zur optischen Erfassung einer Umgebung des Kraftfahrzeugscheinwerfers 1. Die Sensorvorrichtung 8 ist innerhalb des Kraftfahrzeugscheinwerfers 1 dergestalt angeordnet, dass die optische Erfassung der Umgebung durch den zu reinigenden Bereich 2b der Abschlussscheibe 2 hindurch erfolgt.

In den gezeigten Ausführungsbeispielen gemäß den Fig. 1 und 2 umfasst der Kraftfahrzeugscheinwerfer 1 weiters eine Beleuchtungsvorrichtung 9 zur Erzeugung und Abstrahlung einer Lichtfunktion in eine Umgebung des Kraftfahrzeugscheinwerfers 1. Die Beleuchtungsvorrichtung 9 ist innerhalb des Kraftfahrzeugscheinwerfers 1 dergestalt angeordnet, dass die Abstrahlung der Lichtfunktion durch den ersten Bereich 2a der Abschlussscheibe 2 hindurch erfolgt.

Fig. 2 zeigt eine zweite Ausführungsform eines erfindungsgemäßen Kraftfahrzeugscheinwerfers 1. Die verschiedenen Ausführungsformen unterscheiden sich einerseits durch eine unterschiedliche Ausgestaltung von gemeinsamen Komponenten, welche jedoch eine im Wesentlichen gleichartige Wirkungsweise aufweisen und andererseits durch eine umgekehrte Kinematik beim Reinigen der Abschlussscheibe, weshalb, zum besseren Verständnis, für im Wesentlichen gleichartige Komponenten die gleichen Bezugszeichen verwendet werden.

Der Kraftfahrzeugscheinwerfer 1 umfasst eine Abschlussscheibe 2, wobei die Abschlussscheibe 2 aus zumindest zwei Bereichen 2a, 2b gebildet ist, wobei ein erster Bereich 2a ortsfest und ein zweiter, zu reinigender, Bereich 2b relativ zu dem ersten Bereich 2a bewegbar ausgebildet ist.

Der Kraftfahrzeugscheinwerfer 1 umfasst weiters eine Blende 3, welche sich von einer Unterseite der Abschlussscheibe 2 vertikal in Richtung einer Oberseite der Abschlussscheibe 2 hin erstreckt, wobei die vertikale Erstreckung der Blende 3 kleiner ist als die vertikale Erstreckung der Abschlussscheibe 2, wobei die Blende 3 eine Oberkante 3a aufweist, welche die höchste vertikale Erstreckung der Blende 3 relativ zu der Abschlussscheibe 2 definiert.

Der Kraftfahrzeugscheinwerfer 1 umfasst weiters einen Scheibenwischer 4 mit einem Scheibenwischerblatt 4a, welches zwischen der Blende 3 und der Abschlussscheibe 2 ortsfest derart angeordnet ist, dass das Scheibenwischerblatt 4a eine der Blende 3 zugewandte Außenseite der Abschlussscheibe 2 kontaktiert. Das Scheibenwischerblatt 4a befindet sich in dieser Ausführungsform stets vollständig unterhalb der Oberkante 3a der Blende 3.

Eine Antriebsvorrichtung 5 ist dazu eingerichtet, den zweiten Bereich 2b der Abschlussscheibe 2 relativ zu dem ersten Bereich 2a und relativ zu dem Scheibenwischerblatt 4a zu bewegen, wobei durch die Bewegung des zweiten Bereichs 2b und durch den Kontakt des zweiten Bereichs 2b mit dem Scheibenwischerblatt 4a der zweite Bereich 2b gereinigt werden kann.

Der erste Bereich 2a weist ein erstes Material und der zweite, der zu reinigende, Bereich 2b weist ein zweites Material auf, wobei das erste und das zweite Material unterschiedlich sind. Das erste Material hat eine geringere Härte als das zweite Material. In dem gezeigten Ausführungsbeispiels ist das erste Material ein, vorzugsweise transparenter, Kunststoff und das zweite Material ein, vorzugsweise transparentes, Glas umfasst.

Der zweite Bereich 2b der Abschlussscheibe 2 ist um eine Drehachse 6a drehbar gelagert, wobei die Drehachse 6a im Wesentlichen orthogonal auf die Abschlussscheibe 2 orientiert ist. Durch die Drehung des zweiten Bereichs 2b um die Drehachse 6a und den Kontakt des zweiten Bereichs 2b mit dem Scheibenwischerblatt 4a kann der zweite Bereich 2b gereinigt werden.

Analog zur ersten Ausführungsform umfasst der Kraftfahrzeugscheinwerfer 1 weiters eine Sensorvorrichtung 8 zur optischen Erfassung einer Umgebung des Kraftfahrzeugscheinwerfers 1 und eine Beleuchtungsvorrichtung 9 zur Erzeugung und Abstrahlung einer Lichtfunktion in eine Umgebung des Kraftfahrzeugscheinwerfers 1.

Die optische Erfassung der Umgebung erfolgt durch den zu zweiten Bereich 2b der Abschlussscheibe hindurch. Die Abstrahlung der Lichtfunktion erfolgt durch den ersten Bereich 2a der Abschlussscheibe hindurch.

Fig. 3 zeigt eine Vorderansicht eines weiteren Ausführungsbeispiels. Der Kraftfahrzeugscheinwerfer 1 weist zwei Beleuchtungsvorrichtungen 9 und zwei (nicht gezeigte) Sensorvorrichtungen 8 auf. Die Abschlussscheibe 2 weist einen ersten Bereich 2a und zwei zweite Bereiche 2b auf, wobei eine erste Sensorvorrichtung 8 die Umgebung durch einen ersten zweiten Bereich 2b und eine zweite Sensorvorrichtung 8 die Umgebung durch einen zweiten zweiten Bereich 2b erfassen kann. Die Reinigung des zweiten Bereichs 2b kann entweder gemäß der ersten oder zweiten Ausführungsform erfolgen. In dem gezeigten Ausführungsbeispiel überdeckt die Blende 3 jeweils einen Teil der beiden zweiten Bereiche 2b und einen Teil des ersten Bereichs 2a.

## Patentansprüche

1. Kraftfahrzeugscheinwerfer (1), umfassend
- eine Abschlussscheibe (2),
- eine Blende (3), welche an der Abschlussscheibe (2) befestigbar ist, wobei sich die Blende (3) in einem an der Abschlussscheibe (2) befestigen Zustand von einer Unterseite der Abschlussscheibe (2) vertikal in Richtung einer Oberseite der Abschlussscheibe (2) hin erstreckt, wobei die vertikale Erstreckung der Blende (3) kleiner ist als die vertikale Erstreckung der Abschlussscheibe (2), wobei die Blende (3) eine Oberkante (3a) aufweist, welche die höchste vertikale Erstreckung der Blende (3) relativ zu der Abschlussscheibe (2) definiert,
- ein Scheibenwischer (4) mit einem beweglich gelagerten Scheibenwischerblatt (4), welches zwischen der Blende (3) und der Abschlussscheibe (2) angeordnet ist, wobei das Scheibenwischerblatt (4a) eine der Blende (3) zugewandte Außenseite der Abschlussscheibe (2) kontaktiert,
- eine Antriebsvorrichtung (5), welche dazu eingerichtet ist, das Scheibenwischerblatt (4a) zwischen einer Anfangsposition und einer Endposition hin und her zu bewegen, wobei durch die Bewegung des Scheibenwischerblatts (4a) von der Anfangsposition in die Endposition bzw. von der Endposition in die Anfangsposition und durch den Kontakt des Scheibenwischerblatts (4a) mit zumindest einem Teil der Außenseite der Abschlussscheibe (2) ein zu reinigender Bereich der Abschlussscheibe (2) gereinigt werden kann,
**dadurch gekennzeichnet, dass**
sich das Scheibenwischerblatt (4a) in der Anfangsposition vollständig unterhalb der Oberkante der Blende (3) befindet und sich in der Endposition teilweise oder vollständig über die Oberkante (3a) der Blende (3) erstreckt.

2. Kraftfahrzeugscheinwerfer (1) nach Anspruch 1, wobei die Abschlussscheibe (2) aus zumindest zwei Bereichen (2a, 2b) gebildet ist, wobei ein erster Bereich (2a) ein erstes Material und ein zweiter, der zu reinigende, Bereich (2b) ein zweites Material aufweist, wobei vorzugsweise das erste und das zweite Material unterschiedlich sind.

3. Kraftfahrzeugscheinwerfer (1) nach Anspruch 2, wobei das erste Material eine geringere Härte als das zweite Material aufweist.

4. Kraftfahrzeugscheinwerfer (1) nach Anspruch 2 oder 3, wobei das erste Material einen Kunststoff und das zweite Material ein Glas umfasst.

5. Kraftfahrzeugscheinwerfer (1) nach einem der vorhergehenden Ansprüche, wobei das Scheibenwischerblatt (4a) um eine Drehachse (6) drehbar gelagert ist, wobei die Drehachse (6) im Wesentlichen orthogonal auf die Abschlussscheibe (2) orientiert ist, wobei der Übergang von der Anfangsposition in die Endposition bzw. von der Endposition in die Anfangsposition einer Drehung des Scheibenwischerblatts (4a) um die Drehachse (6) entspricht.

6. Kraftfahrzeugscheinwerfer (1) nach einem der vorhergehenden Ansprüche, wobei das Scheibenwischerblatt (4a) entlang einer, vorzugsweise vertikalen, Achse (7) bewegbar ist, wobei die Achse (7) im Wesentlichen parallel zu der Abschlussscheibe orientiert ist, wobei der Übergang von der Anfangsposition in die Endposition bzw. von der Endposition in die Anfangsposition einer Translation des Scheibenwischerblatts (4a) entlang der Achse (7) entspricht.

7. Kraftfahrzeugscheinwerfer (1) nach einem der vorhergehenden Ansprüche, weiters umfassend:
- eine Sensorvorrichtung (8) zur optischen Erfassung einer Umgebung des Kraftfahrzeugscheinwerfers (1), wobei die Sensorvorrichtung (8) innerhalb des Kraftfahrzeugscheinwerfers (1) dergestalt angeordnet ist, dass die optische Erfassung der Umgebung durch den zu reinigenden Bereich (2b) der Abschlussscheibe (2) hindurch erfolgt.

8. Kraftfahrzeugscheinwerfer (1) nach einem der Ansprüche 2 bis 7, weiters umfassend:
- eine Beleuchtungsvorrichtung (9) zur Erzeugung und Abstrahlung einer Lichtfunktion in eine Umgebung des Kraftfahrzeugscheinwerfers (1), wobei die Beleuchtungsvorrichtung (9) innerhalb des Kraftfahrzeugscheinwerfers (1) dergestalt angeordnet ist, dass die Abstrahlung der Lichtfunktion durch den ersten Bereich (2a) der Abschlussscheibe (2) hindurch erfolgt.

9. Kraftfahrzeugscheinwerfer (1), umfassend
- eine Abschlussscheibe (2), wobei die Abschlussscheibe (2) aus zumindest zwei Bereichen (2a, 2b) gebildet ist, wobei ein erster Bereich (2a) ortsfest und ein zweiter, zu reinigender, Bereich (2b) relativ zu dem ersten Bereich (2a) bewegbar ausgebildet ist,
- eine Blende (3), welche sich von einer Unterseite der Abschlussscheibe (3) vertikal in Richtung einer Oberseite der Abschlussscheibe (2) hin erstreckt, wobei die vertikale Erstreckung der Blende (3) kleiner ist als die vertikale Erstreckung der Abschlussscheibe (2), wobei die Blende (3) eine Oberkante (3a) aufweist, welche die höchste vertikale Erstreckung der Blende (3) relativ zu der Abschlussscheibe (2) definiert,
**gekennzeichnet durch**
einen Scheibenwischer (4) mit einem Scheibenwischerblatt (4a), welches zwischen der Blende (3) und der Abschlussscheibe (2) ortsfest derart angeordnet ist, dass das Scheibenwischerblatt (4a) eine der Blende (3) zugewandte Außenseite der Abschlussscheibe (2) kontaktiert, wobei sich das Scheibenwischerblatt (4a) vollständig unterhalb der Oberkante (3a) der Blende (3) befindet,
- eine Antriebsvorrichtung (5), welche dazu eingerichtet ist, den zweiten Bereich (2b) der Abschlussscheibe (2) relativ zu dem ersten Bereich (2a) und relativ zu dem Scheibenwischerblatt (4a) zu bewegen, wobei durch die Bewegung des zweiten Bereichs (2b) und durch den Kontakt des zweiten Bereichs (2b) mit dem Scheibenwischerblatt (4a) der zweite Bereich (2b) gereinigt werden kann.

10. Kraftfahrzeugscheinwerfer (1) nach Anspruch 9, wobei der erste Bereich (2a) ein erstes Material und der zweite, der zu reinigende, Bereich (2b) ein zweites Material aufweist, wobei vorzugsweise das erste und das zweite Material unterschiedlich sind.

11. Kraftfahrzeugscheinwerfer (1) nach Anspruch 10, wobei das erste Material eine geringere Härte als das zweite Material aufweist.

12. Kraftfahrzeugscheinwerfer (1) nach Anspruch 10 oder 11, wobei das erste Material einen Kunststoff und das zweite Material ein Glas umfasst.

13. Kraftfahrzeugscheinwerfer (1) nach einem der Ansprüche 9 bis 12, wobei der zweite Bereich (2b) der Abschlussscheibe (2) um eine Drehachse (6a) drehbar gelagert ist, wobei die Drehachse (6a) im Wesentlichen orthogonal auf die Abschlussscheibe (2) orientiert ist, wobei durch die Drehung des zweiten Bereichs (2b) um die Drehachse (6a) und den Kontakt des zweiten Bereichs (2b) mit dem Scheibenwischerblatt (4a) der zweite Bereich (2b) gereinigt werden kann.

14. Kraftfahrzeugscheinwerfer (1) nach einem der Ansprüche 9 bis 13, weiters umfassend:
- eine Sensorvorrichtung (8) zur optischen Erfassung einer Umgebung des Kraftfahrzeugscheinwerfers (1), wobei die Sensorvorrichtung (8) innerhalb des Kraftfahrzeugscheinwerfers (1) dergestalt angeordnet ist, dass die optische Erfassung der Umgebung durch den zweiten Bereich (2b) der Abschlussscheibe (2) hindurch erfolgt.

15. Kraftfahrzeugscheinwerfer (1) nach einem der Ansprüche 9 bis 14, weiters umfassend:
- eine Beleuchtungsvorrichtung (9) zur Erzeugung und Abstrahlung einer Lichtfunktion in eine Umgebung des Kraftfahrzeugscheinwerfers (1), wobei die Beleuchtungsvorrichtung (9) innerhalb des Kraftfahrzeugscheinwerfers (1) dergestalt angeordnet ist, dass die Abstrahlung der Lichtfunktion durch den ersten Bereich (2a) der Abschlussscheibe (2) hindurch erfolgt.
